# EUROPEAN PATENT APPLICATION

(11) **EP 4 786 131 A1**
(43) Date of publication of application: **05.08.2026**
(21) Application number: 24872168.0
(22) Date of filing: 24.09.2024
(51) Int. Cl.: B29C 33/42, A01G 31/00, B29C 49/48, B29C 51/36

(54) **MOLD UNIT FOR PRODUCING HYDROPONIC PANELS, METHOD FOR PRODUCING HYDROPONIC PANELS, AND HYDROPONIC TRAY AND CONVEYANCE METHOD THEREFOR**

(30) Priority: 29.09.2023 JP 2023170873; 18.10.2023 JP 2023179775; 26.02.2024 JP 2024026699
(71) Applicant: KYORAKU CO., LTD., Kyoto-shi, Kyoto 602-0912 (JP)
(72) Inventor: HATO, Hisanao, Yamato-shi, Kanagawa 242-0018 (JP); MINAMIGAWA, Yuta, Yamato-shi, Kanagawa 242-0018 (JP); TORII, Shuji, Yamato-shi, Kanagawa 242-0018 (JP); SAEKI, Kazuhiko, Tokyo 103-0004 (JP); MOTOHASHI, Yoshinori, Osaka-shi, Osaka 541-0048 (JP)
(74) Representative: Gulde & Partner
(86) International application number: PCT/JP2024/033900
(87) International publication number: WO 2025/070377

(57) **Abstract**

To provide a mold unit capable of manufacturing multiple types of hydroponic cultivation panels having different numbers of holes. According to the present invention, there is provided a mold unit for manufacturing a hydroponic cultivation panel, wherein the mold unit comprises first and second molds configured to be openable and closable, the first and second molds each comprise a mold body, a cavity surface of the mold body is provided with a plurality of piece mounting holes, the piece mounting hole is configured such that both a hole-forming piece for forming a cultivation object insertion hole and a closing piece for closing the piece mounting hole are attachable thereto, and a number of the cultivation object insertion holes formed in the hydroponic cultivation panel is changeable by changing a number of the hole-forming pieces attached to the piece mounting holes.

## Description

### [Technical Field]

The present invention relates to a mold unit for manufacturing a hydroponic cultivation panel and a method for manufacturing a hydroponic cultivation panel, and a hydroponic cultivation tray and a method for conveying the tray.

### [Background Art]

### (First Aspect)

PTL 1 discloses a hydroponic cultivation panel provided with holes into which cultivation objects are inserted, the cultivation objects being configured by planting cultivation objects in a nursery bed member.

### (Second Aspect)

PTL 2 discloses a cultivation apparatus for hydroponically cultivating plants. In this cultivation apparatus, a cultivation tank for holding a cultivation liquid for growing plants is conveyed using a conveyor apparatus while being placed on a cultivation unit.

### [Citation List]

### [Patent Literature]

[PTL 1] JP-A-H9-103203
[PTL 2] JP-A-2022-23725

### [Summary of Invention]

### [Technical Problem]

### (First Aspect)

Hydroponic cultivation panels are sometimes required to have different numbers of holes into which cultivation objects are inserted depending on the type of cultivation object to be cultivated, the cultivation environment, and the like. Hydroponic cultivation panels are usually manufactured by molding using a mold, and from the viewpoint of manufacturing costs and the like, it is desired to manufacture multiple types of hydroponic cultivation panels having different numbers of holes using a common mold. However, since the shape of the mold differs if the number of holes differs, commonization of the mold is not easy.

The present invention has been made in view of such circumstances, and an object thereof is to provide a mold unit capable of manufacturing multiple types of hydroponic cultivation panels having different numbers of holes.

### (Second Aspect)

In PTL 2, the cultivation unit is conveyed by a conveyor apparatus incorporating a drive unit such as a motor, but such a conveyor apparatus has a problem that introduction costs and maintenance costs are expensive, and it is desirable to perform horizontal conveyance using a free conveyor incorporating no drive unit.

The present invention has been made in view of such circumstances, and an object thereof is to provide a hydroponic cultivation tray capable of being conveyed in a horizontal direction using a free conveyor.

### [Solution to Problem]

### (First Aspect)

According to the present invention, the following invention is provided.
[1] A mold unit for manufacturing a hydroponic cultivation panel, wherein the mold unit comprises first and second molds configured to be openable and closable, the first and second molds each comprise a mold body, a cavity surface of the mold body is provided with a plurality of piece mounting holes, the piece mounting hole is configured such that both a hole-forming piece for forming a cultivation object insertion hole and a closing piece for closing the piece mounting hole are attachable thereto, and a number of the cultivation object insertion holes formed in the hydroponic cultivation panel is changeable by changing a number of the hole-forming pieces attached to the piece mounting holes.
[2] The mold unit according to [1], wherein the piece mounting hole of the mold body of the first mold and the piece mounting hole of the mold body of the second mold are disposed at positions facing each other.
[3] The mold unit according to [2], wherein the hole-forming piece attached to the piece mounting hole of the first mold and the hole-forming piece attached to the piece mounting hole of the second mold have the same shape.
[4] A method for manufacturing a hydroponic cultivation panel using the mold unit according to any one of [1] to [3], comprising a first manufacturing step and a second manufacturing step, wherein in the first manufacturing step, the hydroponic cultivation panel is manufactured using the mold unit in a first state, the first state is a state in which the numbers of the hole-forming pieces and the closing pieces attached to the piece mounting holes are each a first predetermined number, in the second manufacturing step, the hydroponic cultivation panel is manufactured using the mold unit in a second state, the second state is a state in which the numbers of the hole-forming pieces and the closing pieces attached to the piece mounting holes are each a second predetermined number, and the second predetermined number is a number different from the first predetermined number.

### (Second Aspect)

According to the present invention, the following invention is provided.
[1] A hydroponic cultivation tray, wherein the tray comprises a bottom portion and a side portion rising so as to surround the bottom portion, the tray comprises an inner wall disposed inside the tray and an outer wall disposed outside the inner wall, the side portion is provided with an engagement recessed portion configured by recessing the outer wall upward, the engagement recessed portion comprises an inner side wall and an outer side wall, the inner side wall and the outer side wall are a pair of side walls of the engagement recessed portion, and the inner side wall is disposed further inside the tray than the outer side wall.
[2] The tray according to [1], wherein a first welded portion in which the inner wall and the outer wall are welded to each other is provided on the inner side wall.
[3] The tray according to [1] or [2], wherein when a direction in which the inner side wall and the outer side wall face each other is defined as a first direction, the engagement recessed portion extends in a second direction perpendicular to the first direction.
[4] The tray according to any one of [1] to [3], wherein when a direction in which the inner side wall and the outer side wall face each other is defined as a first direction, a reinforcing recessed portion extending in the first direction is provided at a position adjacent to the engagement recessed portion.
[5] The tray according to [4], wherein a second welded portion in which the inner wall and the outer wall are welded to each other is provided on a bottom of the reinforcing recessed portion.
[6] The tray according to [4] or [5], wherein a pair of the reinforcing recessed portions are provided at positions adjacent to the engagement recessed portion.
[7] A method for conveying the tray according to any one of [1] to [6], comprising conveying the tray by moving a hook attached to a drive device in a direction of the inner side wall or the outer side wall in a state where a distal end of the hook is engaged with the engagement recessed portion.

### [Advantageous Effects of Invention]

### (First Aspect)

In the mold unit of the present invention, both the hole-forming piece and the closing piece are attachable to the piece mounting hole, and it is possible to attach the hole-forming pieces of the number of desired cultivation object insertion holes to the piece mounting holes and close the remaining piece mounting holes with the closing pieces. According to such a configuration, it is possible to manufacture multiple types of hydroponic cultivation panels having different numbers of holes. Moreover, since the piece mounting hole is closed by the closing piece, it is possible to suppress occurrence of a problem that a molding material enters the piece mounting hole to which the hole-forming piece is not attached.

### (Second Aspect)

In the hydroponic cultivation tray of the present invention, the inner side wall of the engagement recessed portion with which the hook attached to the drive device is engaged is provided with the first welded portion in which the inner wall and the outer wall are welded to each other. According to such a configuration, it is possible to push and pull the tray by engaging the hook of the drive device with the engagement recessed portion. Therefore, for example, by arranging a large number of trays in series on a free conveyor and pushing the tray at one end in the horizontal direction, it is possible to move all the trays arranged in series at the same time. Also, by pulling the tray at the other end in the horizontal direction, it is possible to take out the tray on the free conveyor to the outside of the conveyor. Therefore, according to the present invention, there is provided a hydroponic cultivation tray capable of being conveyed in the horizontal direction using a free conveyor.

### [Brief Description of Drawings]

### (First Aspect)

Fig. 1 is a perspective view of a hydroponic cultivation panel 40.
Fig. 2A is a cross-sectional view taken along line A-A in Fig. 1. Fig. 2B is an enlarged view of region B in Fig. 2A. Fig. 2C is a cross-sectional view corresponding to Fig. 2B, showing a state in which the panel 40 having a cultivation object 34 inserted into a cultivation object insertion hole 31 is floated on a nutrient solution 9.
Fig. 3 is a perspective view showing a configuration example of the hydroponic cultivation panel 40 having sixteen cultivation object insertion holes 31.
Fig. 4 is a perspective view of a mold unit 20.
Fig. 5A is a cross-sectional view taken along line A-A in Fig. 4. Fig. 5B is an enlarged view of region B in Fig. 5A. Fig. 5C is an exploded view of Fig. 5B.
Fig. 6A to Fig. 6C are perspective views of a mold body 23, a hole-forming piece 24, and a closing piece 25, respectively. Fig. 6D is an exploded perspective view of Fig. 6B.
Fig. 7A is a perspective view showing a configuration example of the mold body 23 having sixty-four piece mounting holes 23c. Fig. 7B is a plan view showing a state in which, among the piece mounting holes 23c of the mold body 23 of Fig. 7A, those to which the hole-forming pieces 24 are attached (sixteen pieces) are surrounded by a thick line 26.
Fig. 8A to Fig. 8B are plan views showing states in which, among the piece mounting holes 23c of the mold body 23 of Fig. 7A, those to which the hole-forming pieces 24 are attached (thirty-two pieces, forty-eight pieces) are surrounded by the thick line 26, respectively.
Fig. 9 is a cross-sectional view showing a state after first and second resin sheets 35a, 35b are disposed as a parison 35 between a first mold 21 and a second mold 22.
Fig. 10 is a cross-sectional view showing a state after the first and second resin sheets 35a, 35b are shaped by the first and second molds 21, 22 from the state of Fig. 9.
Fig. 11 is a cross-sectional view showing a state after the first and second molds 21, 22 are closed from the state of Fig. 10.
Fig. 12 is a cross-sectional view after a molded body 8 is taken out from the first and second molds 21, 22 from the state of Fig. 11.
Fig. 13A to Fig. 13C are a perspective view, a plan view, and a front view showing a modification of the closing piece 25, respectively.
Fig. 14A is a cross-sectional view corresponding to Fig. 5B, showing a state in which the closing piece 25 of Fig. 13A is attached to the mold body 23. Fig. 14B is a cross-sectional view corresponding to Fig. 2B of the panel 40 manufactured using the mold unit 20 to which the closing piece 25 of Fig. 13A is attached. Fig. 14C is an enlarged view of region C in Fig. 14B.
Fig. 15A to Fig. 15C are views corresponding to Fig. 14A to Fig. 14C when the closing piece 25 is attached to the mold body 23 so that a top surface 25c of the closing piece 25 projects from a cavity surface 23a.

### (Second Aspect)

Fig. 16A and Fig. 16B are a perspective view seen from diagonally above and a perspective view seen from diagonally below, respectively, of the hydroponic cultivation tray 10 and the hook 4 of one embodiment of the present invention.
Fig. 17A is an enlarged view of region A in Fig. 16B, and Fig. 17B is a perspective view of a state after the hook 4 is engaged with the engagement recessed portion 2f from the state of Fig. 17A. The dash-dotted line in the figure indicates a change in curvature. The same applies to other figures.
Fig. 18 is a bottom view of the tray 10 and the hook 4 of Figs. 16A and 16B.
Fig. 19 is an enlarged view of region A in Fig. 18.
Fig. 20A to Fig. 20C are a cross-sectional view taken along line A-A, a cross-sectional view taken along line B-B, and a cross-sectional view taken along line C-C in Fig. 19, respectively.
Fig. 21 shows a state after the hook 4 is engaged with the engagement recessed portion 2f from the state of Fig. 20A.
Fig. 22A to Fig. 22B are a cross-sectional view taken along line D-D and a cross-sectional view taken along line E-E in Fig. 19, respectively.
Fig. 23A and Fig. 23B are a plan view and a front view of a conveying device 5 conveying the tray 10, respectively.

### [Description of Embodiments]

Hereinafter, embodiments of the present invention will be described. Various features shown in the embodiments shown below can be combined with each other. In addition, the invention is established independently for each feature. Furthermore, among the following embodiments, elements not defined in the claims are arbitrary elements and thus can be omitted. An arbitrary number (for example, one or two) of "0"s may be added to the end of numerical values disclosed in the following description. For example, "1.4" may be changed to "1.40" or "1.400" by adding one or two "0"s after "1.4".

### (First Aspect)

### 1. Hydroponic cultivation panel 40

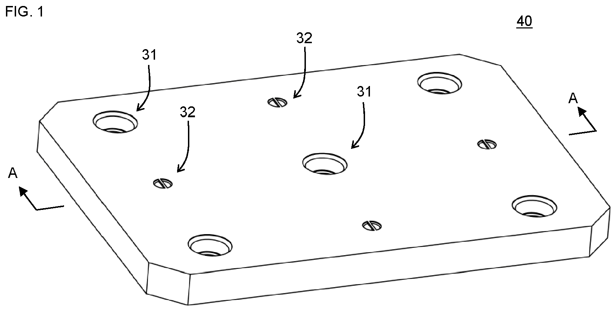

First, the hydroponic cultivation panel 40 that can be manufactured using the mold unit for manufacturing a hydroponic cultivation panel 20 described later will be described with reference to Figs. 1 to 2.

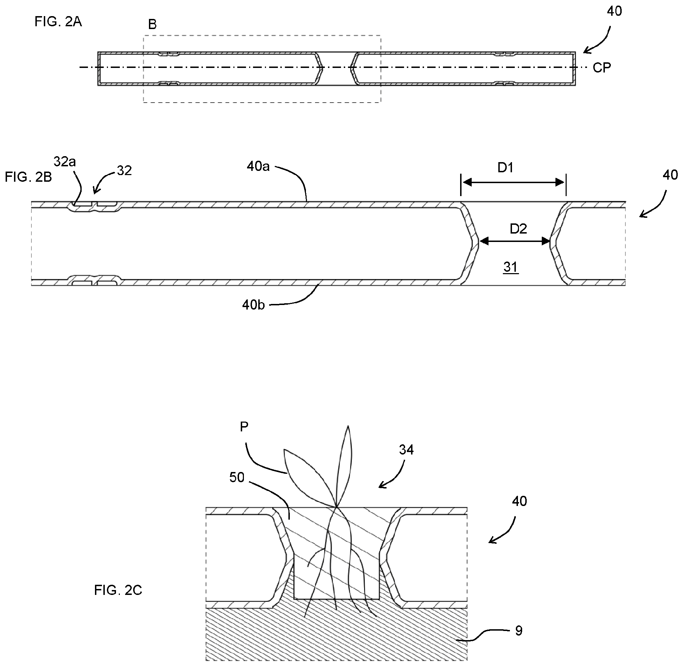

The hydroponic cultivation panel 40 of one embodiment of the present invention shown in Figs. 1 to 2 is used for hydroponic cultivation by being floated on the nutrient solution 9 as shown in Fig. 2C. The panel 40 is preferably composed of a hollow resin molded body. The inside of the hollow resin molded body may be a cavity or may contain a core material such as foam.

The panel 40 has a substantially rectangular shape, and its dimension in the short side direction is, for example, 20 to 70 cm, its dimension in the long side direction is, for example, 50 to 120 cm, and its thickness is, for example, 20 to 40 mm. Specifically, the dimension in the short side direction is, for example, 20, 25, 30, 35, 40, 45, 50, 55, 60, 65, 70 cm, and may be within a range between any two of the numerical values exemplified here. Specifically, the dimension in the long side direction is, for example, 50, 55, 60, 65, 70, 75, 80, 85, 90, 95, 100, 105, 110, 115, 120 cm, and may be within a range between any two of the numerical values exemplified here. Specifically, the thickness of the panel 40 is, for example, 20, 25, 30, 35, 40 mm, and may be within a range between any two of the numerical values exemplified here.

The panel 40 is provided with the cultivation object insertion holes 31 and the closing piece traces 32. Details of the closing piece trace 32 will be described later.

The cultivation object insertion hole 31 is a hole for inserting the cultivation object 34. The cultivation object insertion hole 31 is provided so as to penetrate the panel 40 in the vertical direction. The cultivation object 34 is preferably configured by planting a plant P in a plug body 50 so as to be easily held in the cultivation object insertion hole 31. The plug body 50 is preferably one that is elastically deformable and has water absorbency, such as a sponge. The elastic force of the plug body 50 makes it possible to press the plug body 50 against the inner surface of the cultivation object insertion hole 31 to hold the cultivation object 34 in the cultivation object insertion hole 31.

The panel 40 is provided with a plurality of cultivation object insertion holes 31, and it is preferable that the plurality of cultivation object insertion holes 31 be provided regularly. The interval between adjacent cultivation object insertion holes 31 is preferably, for example, 50 mm or more. This interval is, for example, 50 to 200 mm, specifically, for example, 50, 60, 70, 80, 90, 100, 110, 120, 130, 140, 150, 160, 170, 180, 190, 200 mm, and may be a range between any two of the numerical values exemplified here or more than any of them.

The color and/or reflectance with respect to visible light (hereinafter, "reflectance") of the upper surface 40a and the lower surface 40b of the panel 40 may be the same or different from each other. For example, one of the upper surface 40a and the lower surface 40b can be white and the other can be black. In this case, when floating the panel 40 on water, by directing the black surface (surface with low reflectance) toward the underwater side and the white surface (surface with high reflectance) toward the above-water side, it is possible to promote the growth of plants above water while suppressing the propagation of algae in water. Also, in a lowtemperature environment such as winter, when floating the panel 40 on water, by directing the black surface (surface with low reflectance) toward the above-water side, the temperature of the panel 40 can be increased by light absorption, and heating and lighting costs can be reduced.

As shown in Fig. 2A, the panel 40 preferably has a symmetrical shape with respect to a center plane CP in the vertical direction of the panel 40. In this case, there is an advantage that the panel 40 is easily used by turning it upside down. Also, in this case, the cultivation object insertion hole 31 also has a symmetrical shape with respect to the center plane CP. An opening diameter D1 on the upper surface 40a side or the lower surface 40b side is, for example, 20 to 60 mm. In this specification, "opening diameter" means an equivalent circle diameter. Specifically, D1 is, for example, 20, 25, 30, 35, 40, 45, 50, 55, 60 mm, and may be within a range between any two of the numerical values exemplified here.

The cultivation object insertion hole 31 preferably has a shape whose diameter decreases from the upper surface 40a or the lower surface 40b toward the inside of the panel 40. In other words, the cultivation object insertion hole 31 preferably has a shape in which two truncated cone shapes are connected at distal ends. Assuming that the opening diameter at the portion where the opening diameter is smallest in the cultivation object insertion hole 31 is D2, D2/D1 is, for example, 0.40 to 0.95, and preferably 0.50 to 0.80. Specifically, this value is, for example, 0.40, 0.45, 0.50, 0.55, 0.60, 0.65, 0.70, 0.75, 0.80, 0.85, 0.90, 0.95, and may be a range between any two of the numerical values exemplified here.

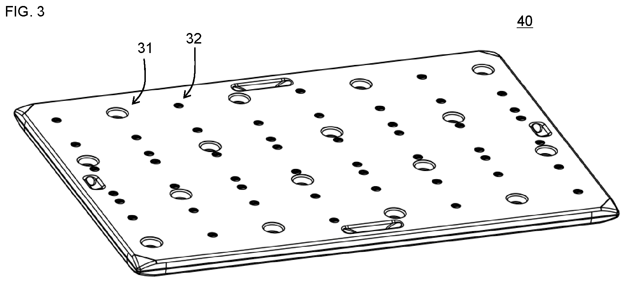

The number of the cultivation object insertion holes 31 is not particularly limited, and in one example, sixteen cultivation object insertion holes 31 are provided as shown in Fig. 3. On the other hand, there are cases where panels 40 having the same external shape of the panel 40 but different numbers of the cultivation object insertion holes 31 are required. For example, there are cases where a panel 40 having 32 or 48 cultivation object insertion holes 31 is required. In such a case, if a mold is prepared for each panel 40, costs required for manufacturing the mold and managing the mold increase, so it is desired to manufacture multiple types of panels 40 having different numbers of cultivation object insertion holes 31 using a common mold.

### 2. Mold unit for manufacturing hydroponic cultivation panel 20

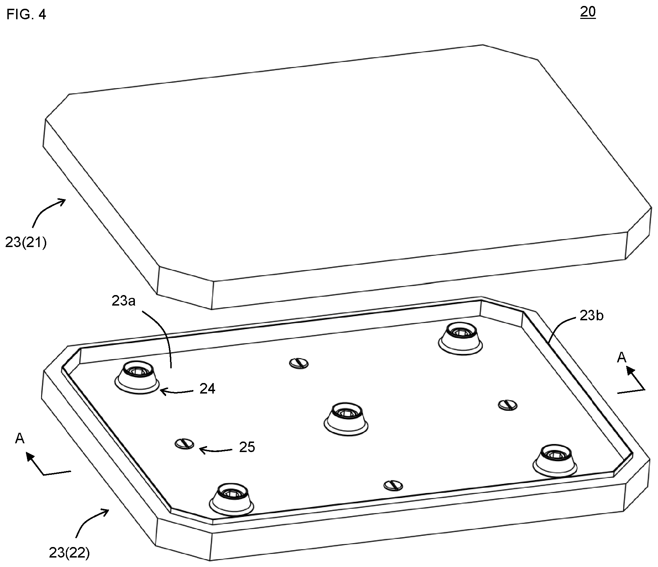

Next, the mold unit for manufacturing a hydroponic cultivation panel 20 of one embodiment of the present invention will be described using Figs. 4 to 8. The mold unit 20 has a configuration suitable for manufacturing multiple types of panels 40 having different numbers of cultivation object insertion holes 31.

As shown in Fig. 4, the mold unit 20 has first and second molds 21, 22 configured to be openable and closable. In the present embodiment, the first and second molds 21, 22 have a symmetrical shape centered on a parting surface, but may have an asymmetrical shape. The first and second molds 21, 22 each have a mold body 23.

Each mold body 23 has a cavity surface 23a. The cavity surface 23a is surrounded by a pinch-off portion 23b. The cavity surface 23a of the first mold 21 and the cavity surface 23a of the second mold 22 are combined to form a cavity having a shape corresponding to the external shape of the panel 40.

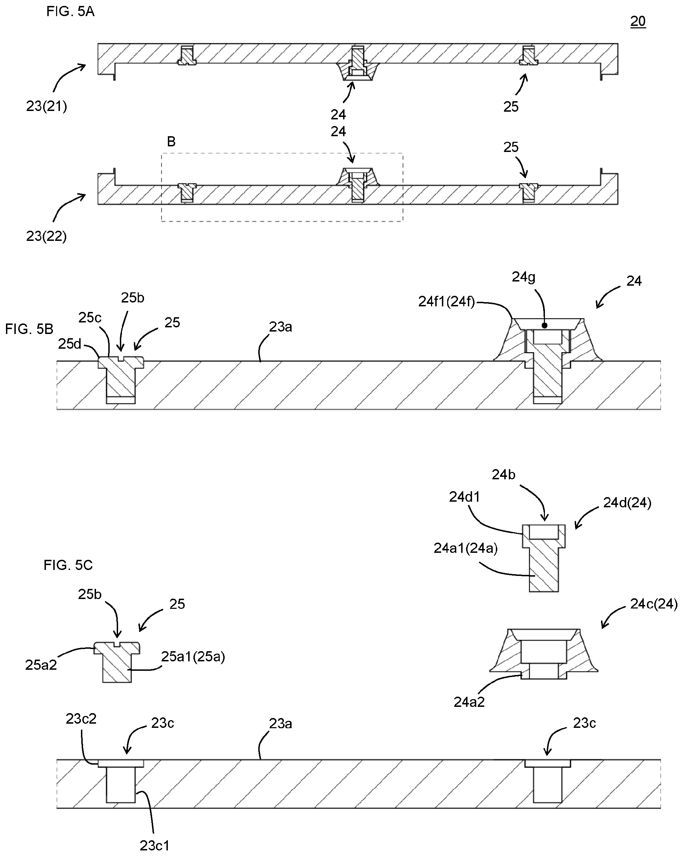

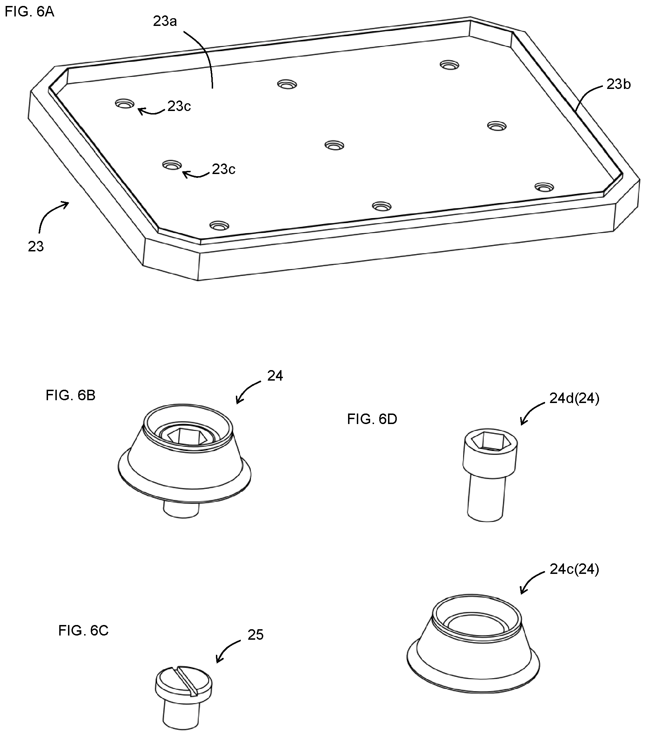

As shown in Fig. 5C and Fig. 6A, the cavity surface 23a is provided with a plurality of piece mounting holes 23c. The piece mounting hole 23c is configured such that both a hole-forming piece 24 for forming the cultivation object insertion hole 31 and a closing piece 25 for closing the piece mounting hole 23c are attachable thereto. Then, by changing the number of hole-forming pieces 24 attached to the piece mounting holes 23c, it is possible to change the number of cultivation object insertion holes 31 formed in the hydroponic cultivation panel 40. In the present embodiment, the plurality of hole-forming pieces 24 attached to the first mold 21 or the second mold 22 have the same shape, but those having different shapes may be included. Similarly, the plurality of closing pieces 25 attached to the first mold 21 or the second mold 22 have the same shape, but those having different shapes may be included.

The mechanism for attaching the hole-forming piece 24 and the closing piece 25 to the piece mounting hole 23c is not particularly limited, but since the hole-forming piece 24 attached to the piece mounting hole 23c may be replaced with the closing piece 25, or conversely, the closing piece 25 may be replaced with the hole-forming piece 24, it is preferable that the hole-forming piece 24 and the closing piece 25 be configured to be easily attachable and detachable from the piece mounting hole 23c.

It is preferable that the hole-forming piece 24 and the closing piece 25 include insertion protrusions 24a, 25a that can be inserted into the piece mounting hole 23c, respectively. It is preferable to attach the hole-forming piece 24 and the closing piece 25 to the piece mounting hole 23c by inserting and engaging the insertion protrusions 24a, 25a into the piece mounting hole 23c.

Preferably, the piece mounting hole 23c includes a female screw portion 23c1 and a diameter-expanded portion 23c2. The diameter-expanded portion 23c2 is provided at a position adjacent to the cavity surface 23a. It is preferable that the diameter-expanded portion 23c2 is not a female screw. It is preferable that male screw portions 24a1, 25a1 are provided on the outer peripheral surfaces of the insertion protrusions 24a, 25a. In this case, the hole-forming piece 24 and the closing piece 25 can be attached to the piece mounting hole 23c by screwing the female screw portion 23c1 and the male screw portions 24a1, 25a1 together, and the hole-forming piece 24 and the closing piece 25 can be removed from the piece mounting hole 23c by unscrewing. The insertion protrusions 24a, 25a may be engaged with the piece mounting hole 23c by snap-fitting or strongly fitting to a detachable extent instead of screwing into the piece mounting hole 23c.

It is preferable that the hole-forming piece 24 and the closing piece 25 include diameter-expanded portions 24a2, 25a2 expanded in diameter compared to the male screw portions 24a1, 25a1. The inner diameter of the diameter-expanded portion 23c2 is the same as or slightly larger than the outer diameter of the diameter-expanded portions 24a2, 25a2, and by engaging the diameter-expanded portions 24a2, 25a2 with the diameter-expanded portion 23c2, positioning accuracy of the hole-forming piece 24 and the closing piece 25 is improved.

It is preferable that each of the hole-forming piece 24 and the closing piece 25 includes engagement portions 24b, 25b engageable with a fastening tool such as a screwdriver or a wrench. This makes it possible to attach and detach the hole-forming piece 24 and the closing piece 25 using an attachment tool. In the present embodiment, the engagement portion 24b of the hole-forming piece 24 is composed of a hexagonal hole, and it is possible to attach and detach the hole-forming piece 24 to and from the piece mounting hole 23c by engaging a hexagonal wrench with the engagement portion 24b and rotating it. Also, the engagement portion 25b of the closing piece 25 is composed of a straight groove, and it is possible to attach and detach the closing piece 25 to and from the piece mounting hole 23c by engaging a flathead screwdriver or a coin with the engagement portion 25b and rotating it.

The hole-forming piece 24 includes a piece body 24c and an engagement member 24d. The outer peripheral surface of the piece body 24c has a shape corresponding to the inner peripheral surface of the cultivation object insertion hole 31. The engagement member 24d includes an engagement portion 24d1 engaged with the piece body 24c and the insertion protrusion 24a connected thereto. The hole-forming piece 24 can be attached to the piece mounting hole 23c by engaging the engagement member 24d with the piece body 24c and inserting and engaging the insertion protrusion 24a into the piece mounting hole 23c.

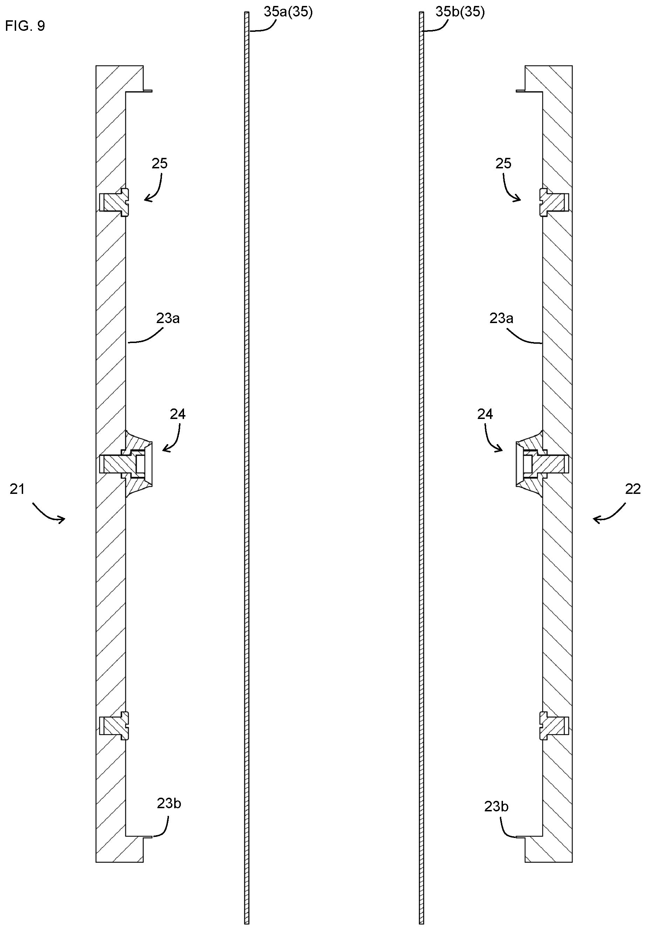

It is preferable that the hole-forming pieces 24 are disposed at positions facing each other in the first mold 21 and the second mold 22 respectively, and distal ends 24f of the hole-forming piece 24 of the first mold 21 and the hole-forming piece 24 of the second mold 22 abut against each other when the first and second molds 21, 22 are closed. In this case, as shown in Figs. 9 to 11, when the first and second molds 21, 22 are closed with the parison 35 sandwiched between the first and second molds 21, 22, it is possible to form a pinch-off portion 35d in which opposing inner surfaces of the parison 35 are welded together by clamping the parison 35 with the distal end 24f of the hole-forming piece 24 of the first mold 21 and the distal end 24f of the hole-forming piece 24 of the second mold 22. In order to clamp the parison 35 with high pressure, it is preferable that an annular portion 24f1 is provided at the distal end 24f of the hole-forming piece 24, and it is preferable that a resin reservoir 24g for accommodating a portion 35e inside the annular pinch-off portion 35d is provided inside the annular portion 24f1. The outer peripheral surface of the structure in which the hole-forming piece 24 of the first mold 21 and the hole-forming piece 24 of the second mold 22 are combined forms the inner peripheral surface of the cultivation object insertion hole 31 penetrating the panel 40.

In order to dispose the hole-forming pieces 24 at positions facing each other in the first mold 21 and the second mold 22 respectively, the piece mounting holes 23c are also disposed at positions facing each other in the first mold 21 and the second mold 22 respectively, and as a result, the closing pieces 25 are also disposed at positions facing each other in the first mold 21 and the second mold 22 respectively.

The closing piece 25 is preferably configured such that a top surface 25c projects from the cavity surface 23a, and the bottom of the engagement portion 25b provided on the top surface 25c is flush with the cavity surface 23a or is configured to protrude from the cavity surface 23a. In this case, the closing piece trace 32 (shown in Fig. 1 and Fig. 2B) formed due to the closing piece 25 is suppressed from projecting from the upper surface 40a or the lower surface 40b of the panel 40. This suppresses the closing piece trace 32 of one panel 40 from interfering with the other panel 40 when stacking the panels 40. Moreover, it is preferable that an edge 25d of the top surface 25c is rounded. In this case, since an edge 32a (shown in Fig. 2B) of the bottom portion of the closing piece trace 32 is rounded, dirt is suppressed from remaining on the edge 32a of the bottom portion of the closing piece trace 32 when the panel 40 is washed and repeatedly used.

As described above, in the mold unit 20 of the present embodiment, since the hole-forming piece 24 and the closing piece 25 are configured to be easily replaceable, the number of hole-forming pieces 24 attached to the mold unit 20 can be easily increased or decreased. Further, since the closing piece 25 is disposed in the piece mounting hole 23c to which the hole-forming piece 24 is not attached, entry of resin into the piece mounting hole 23c is suppressed. Therefore, it is possible to avoid failure of the mold unit 20 due to entry of resin into the piece mounting hole 23c and formation of a protrusion due to the piece mounting hole 23c on the panel 40.

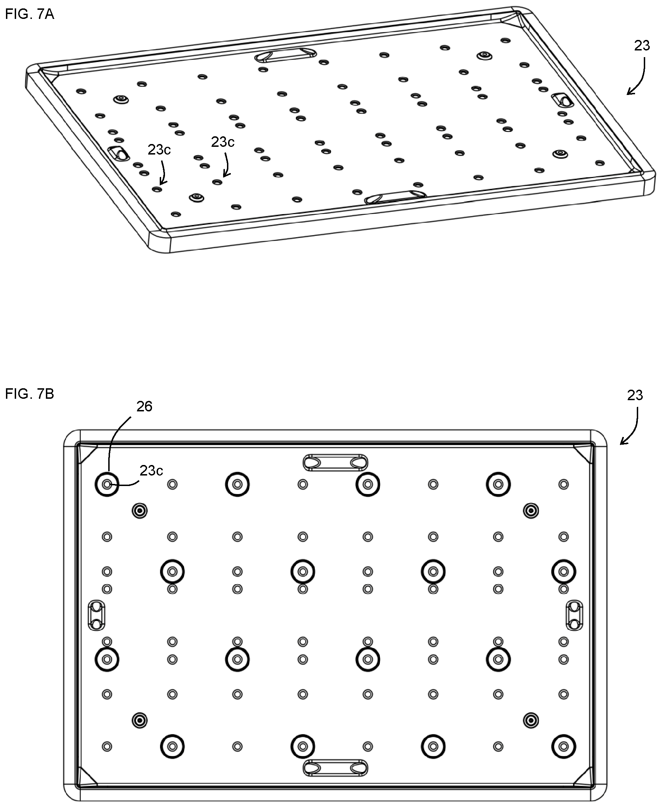

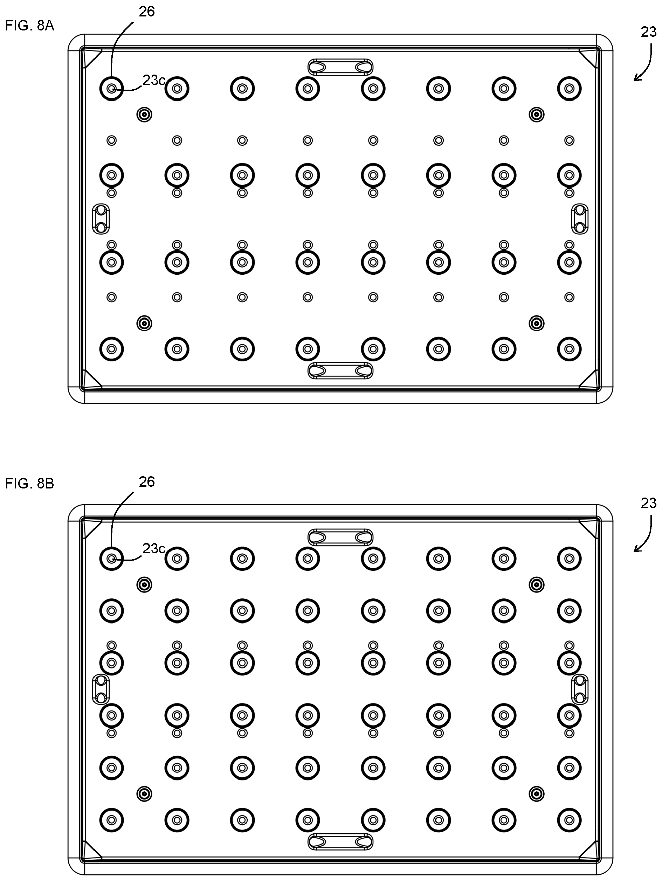

In one example, as shown in Fig. 7A, sixty-four piece mounting holes 23c are provided in each mold body 23. When manufacturing the panel 40 in which the number of cultivation object insertion holes 31 is sixteen, for example, the hole-forming pieces 24 are attached to sixteen piece mounting holes 23c surrounded by the thick line 26 in Fig. 7B, and the closing pieces 25 are attached to the remaining piece mounting holes 23c. When manufacturing the panel 40 in which the number of cultivation object insertion holes 31 is thirty-two, for example, the hole-forming pieces 24 are attached to thirty-two piece mounting holes 23c surrounded by the thick line 26 in Fig. 8A, and the closing pieces 25 are attached to the remaining piece mounting holes 23c. When manufacturing the panel 40 in which the number of cultivation object insertion holes 31 is forty-eight, for example, the hole-forming pieces 24 are attached to forty-eight piece mounting holes 23c surrounded by the thick line 26 in Fig. 8B, and the closing pieces 25 are attached to the remaining piece mounting holes 23c. Thus, by replacing the hole-forming piece 24 and the closing piece 25, it becomes possible to manufacture multiple types of panels 40 having different numbers of cultivation object insertion holes 31 using the common mold unit 20.

### 3. Method for manufacturing hydroponic cultivation panel 40

The method for manufacturing the hydroponic cultivation panel 40 of one embodiment of the present invention can be carried out using the above-described mold unit 20. This method comprises a first manufacturing step and a second manufacturing step.

In the first manufacturing step, the hydroponic cultivation panel 40 is manufactured using the mold unit 20 in a first state. The first state is a state in which the numbers of hole-forming pieces 24 and closing pieces 25 attached to the piece mounting holes 23c are each a first predetermined number. The first predetermined number is, for example, that the number of piece mounting holes 23c is sixty-four, the number of hole-forming pieces 24 is sixteen, and the number of closing pieces 25 is forty-eight.

In the second manufacturing step, the hydroponic cultivation panel 40 is manufactured using the mold unit 20 in a second state. The second state is a state in which the numbers of hole-forming pieces 24 and closing pieces 25 attached to the piece mounting holes 23c are each a second predetermined number. The second predetermined number is a number different from the first predetermined number. The second predetermined number is, for example, that the number of piece mounting holes 23c is sixty-four, the number of hole-forming pieces 24 is thirty-two, and the number of closing pieces 25 is thirty-two.

The above method may comprise a third manufacturing step. In the third manufacturing step, the hydroponic cultivation panel 40 is manufactured using the mold unit 20 in a third state. The third state is a state in which the numbers of hole-forming pieces 24 and closing pieces 25 attached to the piece mounting holes 23c are each a third predetermined number. The third predetermined number is a number different from both the first predetermined number and the second predetermined number. The third predetermined number is, for example, that the number of piece mounting holes 23c is sixty-four, the number of hole-forming pieces 24 is forty-eight, and the number of closing pieces 25 is sixteen.

According to the above method, it is possible to manufacture multiple types of panels 40 having different numbers of cultivation object insertion holes 31 using the common mold unit 20.

In each of the first to third manufacturing steps, the panel 40 can be manufactured by a method comprising, for example, a disposing step, a molding step, and a post-processing step. The first to third manufacturing steps are similar steps except that the numbers of hole-forming pieces 24 and closing pieces 25 attached to the mold unit 20 are different. Hereinafter, the disposing step, the molding step, and the post-processing step will be described in detail.

### 3-1. Disposing step

In the disposing step, as shown in Fig. 9, the first and second molds 21, 22 which can be opened and closed relative to each other are put in an open state, and the parison 35 is disposed between the first and second molds 21, 22.

The parison 35 can be formed by extruding a molten resin from an extrusion head (not shown). The parison 35 may be tubular or sheet-shaped. When the parison 35 is sheet-shaped, the parison 35 is composed of, for example, the first and second resin sheets 35a, 35b. In this case, as shown in Fig. 9, the first and second resin sheets 35a, 35b are disposed between the first and second molds 21, 22. The color and/or reflectance of the first and second resin sheets 35a, 35b can be made different from each other, whereby the panel 40 in which the color and/or reflectance of the upper surface 40a and the lower surface 40b are different from each other can be manufactured.

The resin constituting the parison 35 is preferably a thermoplastic resin such as polyolefin, and examples of the polyolefin include low density polyethylene, linear low density polyethylene, high density polyethylene, polypropylene, ethylene-propylene copolymer, and mixtures thereof.

### 3-2. Molding step

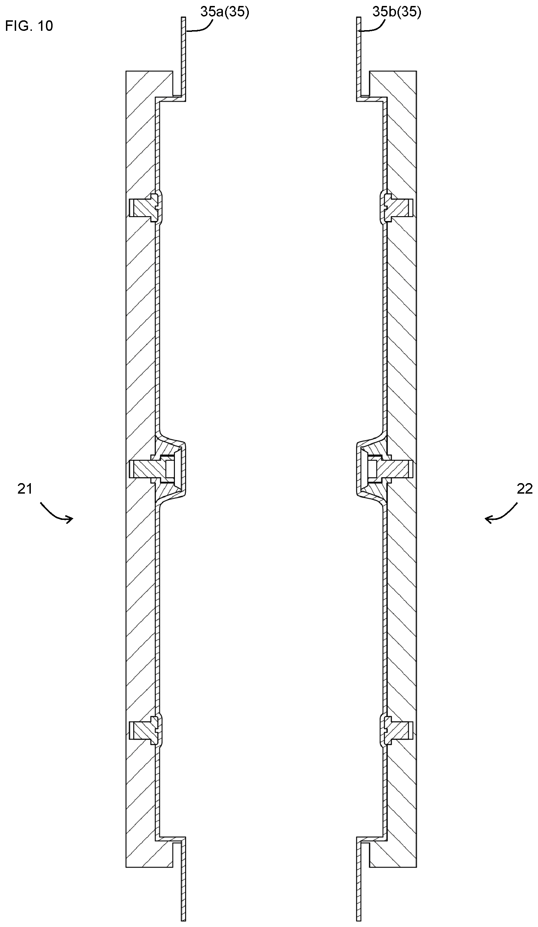

In the molding step, as shown in Figs. 10 to 12, the first and second molds 21, 22 are put in a closed state with the parison 35 disposed between the first mold 21 and the second mold 22, and by abutting the distal end 24f of the hole-forming piece 24 of the first mold 21 and the distal end 24f of the hole-forming piece 24 of the second mold 22 against each other, the parison 35 is clamped to weld opposing inner surfaces of the parison 35 to each other to form the pinch-off portion 35d, and the parison 35 is molded into a panel shape to form the molded body 8. At this time, a burr 35c is formed outside the pinch-off portion 23b. Further, the portion 35e inside the annular pinch-off portion 35d is disposed in the resin reservoir 24g (shown in Fig. 5B) provided in the hole-forming piece 24. Examples of the molding method include blow molding, vacuum forming, combinations thereof, and the like.

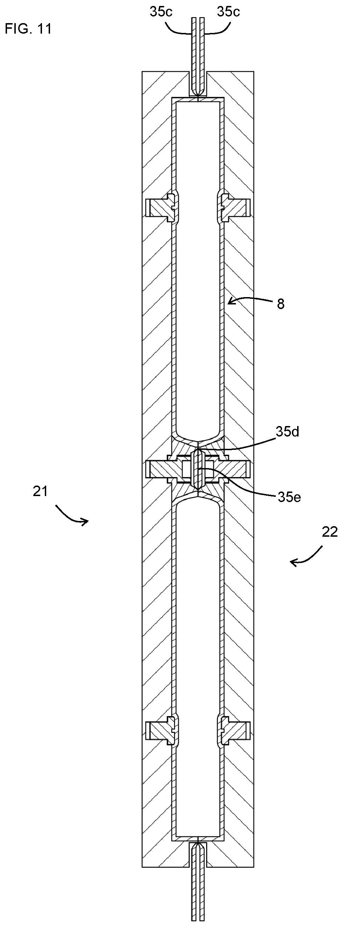

When the parison 35 is composed of the first and second resin sheets 35a, 35b, first, as shown in Fig. 10, the first resin sheet 35a is vacuum-suctioned by the first mold 21 to be shaped into a shape along the cavity surface 23a of the first mold 21, and the second resin sheet 35b is vacuum-suctioned by the second mold 22 to be shaped into a shape along the cavity surface 23a of the second mold 22. Next, as shown in Fig. 11, the first and second molds 21, 22 are put in a closed state to mold the first and second resin sheets 35a, 35b into a panel shape to form the molded body 8.

By performing the molding step in a state where a core material such as foam is disposed inside the tubular parison 35 or between the first and second resin sheets 35a, 35b, the panel 40 having the core material inside the resin molded body can be manufactured.

### 3-3. Post-processing step

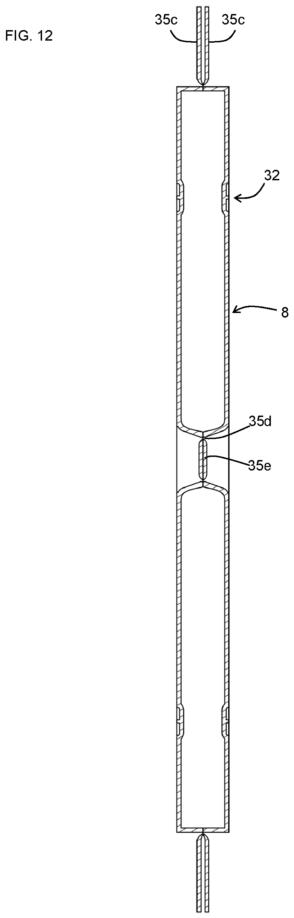

In the post-processing step, as shown in Fig. 12, the pinch-off portion 35d and the portion 35e inside thereof are removed from the molded body 8 to form the cultivation object insertion hole 31. The removal of the pinch-off portion 35d and the portion 35e may be performed in the first and second molds 21, 22, or may be performed after opening the first and second molds 21, 22 and taking out the molded body 8. The removal of the pinch-off portion 35d and the portion 35e can be performed by cutting the pinch-off portion 35d using a cutter or the like.

Furthermore, by performing various post-processing such as removal of the burr 35c adhering to the molded body 8, the desired panel 40 shown in Figs. 1 to 2 can be obtained.

### 4. Modification of closing piece 25

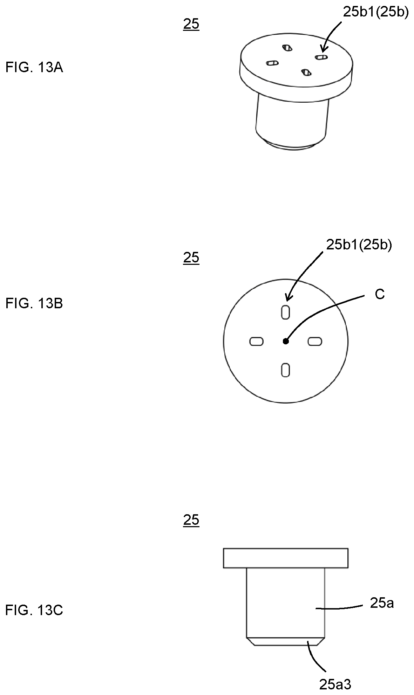

A modification of the closing piece 25 is shown in Fig. 13. In this modification, the closing piece 25 is configured such that the engagement portion 25b is not a groove but a plurality of island-shaped recessed portions 25b1 provided in an island shape. Since the resin of the resin sheets 35a, 35b is unlikely to enter the island-shaped recessed portion 25b1, forming the engagement portion 25b with the island-shaped recessed portion 25b1 suppresses formation of a trace of the engagement portion 25b on the panel 40.

The plurality of island-shaped recessed portions 25b1 are disposed along a circumferential direction centered on a rotation center C of the closing piece 25. By engaging a jig with the island-shaped recessed portion 25b1 and rotating the closing piece 25, the closing piece 25 can be attached to and detached from the mold body 23. The island-shaped recessed portions 25b1 may be provided in a number necessary for rotating the closing piece 25, and in this modification, four island-shaped recessed portions 25b1 are provided at 90-degree intervals, but the interval and the number can be changed as appropriate. In one example, two island-shaped recessed portions 25b1 can be provided at 180-degree intervals.

Further, the closing piece 25 of this modification is provided with a tapered surface 25a3 at the distal end of the insertion protrusion 25a. For this reason, it is easy to insert the insertion protrusion 25a into the piece mounting hole 23c.

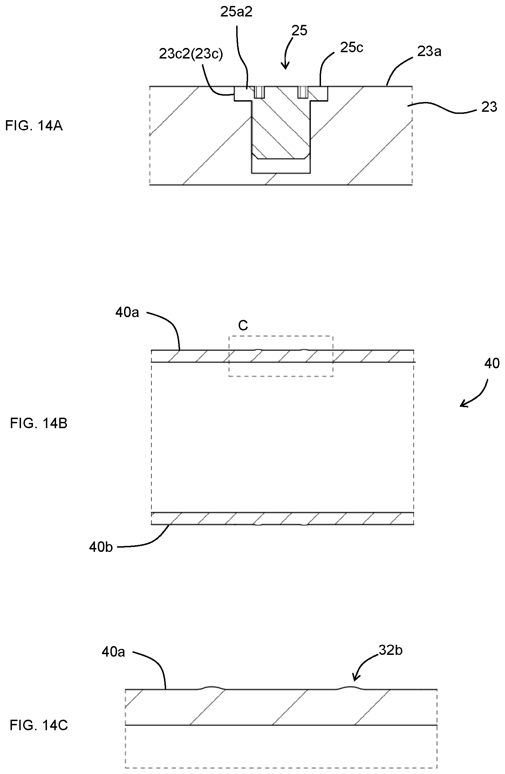

Furthermore, in the closing piece 25 of this modification, the thickness of the diameter-expanded portion 25a2 is thinner than that of the embodiment shown in Fig. 6C, and matches the depth of the diameter-expanded portion 23c2 of the piece mounting hole 23c. Therefore, as shown in Fig. 14A, in a state where the closing piece 25 is attached to the mold body 23, the top surface 25c of the closing piece 25 can be flush with the cavity surface 23a of the mold body 23. In this case, as shown in Figs. 14B to 14C, formation of a trace of the diameter-expanded portion 25a2 on the panel 40 is suppressed.

On the other hand, there is a case where the resin of the resin sheets 35a, 35b enters the island-shaped recessed portion 25b1, and in that case, as shown in Figs. 14B to 14C, a protrusion 32b formed due to the island-shaped recessed portion 25b1 may project from the upper surface 40a or the lower surface 40b. If the protrusion 32b projects from the upper surface 40a or the lower surface 40b, it causes rattling when stacking the plurality of panels 40, so it is preferable that the protrusion 32b does not project from the upper surface 40a or the lower surface 40b.

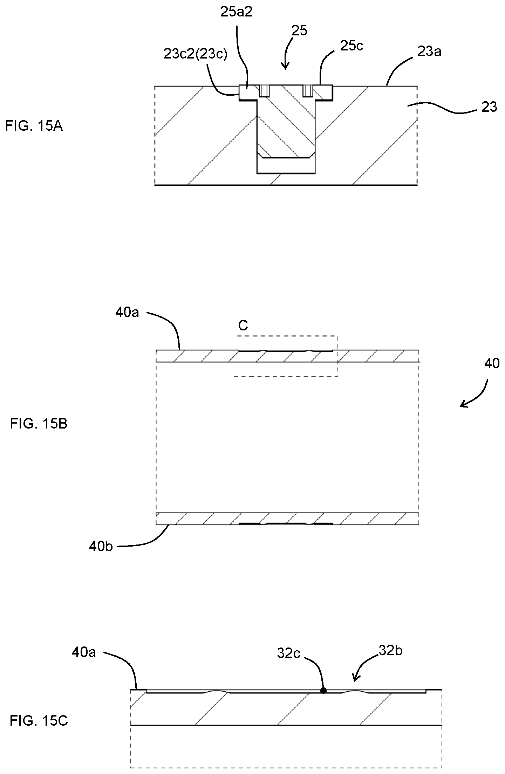

For this reason, as shown in Fig. 15A, it is preferable to attach the closing piece 25 so that the top surface 25c projects from the cavity surface 23a. In this case, as shown in Figs. 15B to 15C, since the protrusion 32b is formed in the recessed portion 32c formed due to the diameter-expanded portion 25a2, projection of the protrusion 32b from the upper surface 40a or the lower surface 40b is suppressed.

The amount of projection of the top surface 25c from the cavity surface 23a is preferably 5 mm or less, more preferably 3 mm or less, and further preferably 1 mm or less. This amount of projection is, for example, 0 to 5 mm, specifically, for example, 0.0, 0.1, 0.2, 0.3, 0.4, 0.5, 0.6, 0.7, 0.8, 0.9, 1.0, 1.5, 2.0, 2.5, 3.0, 3.5, 4.0, 4.5, 5.0 mm, and may be a range between any two of the numerical values exemplified here or less than any of them.

### (Second Aspect)

### 1. Hydroponic cultivation tray 10

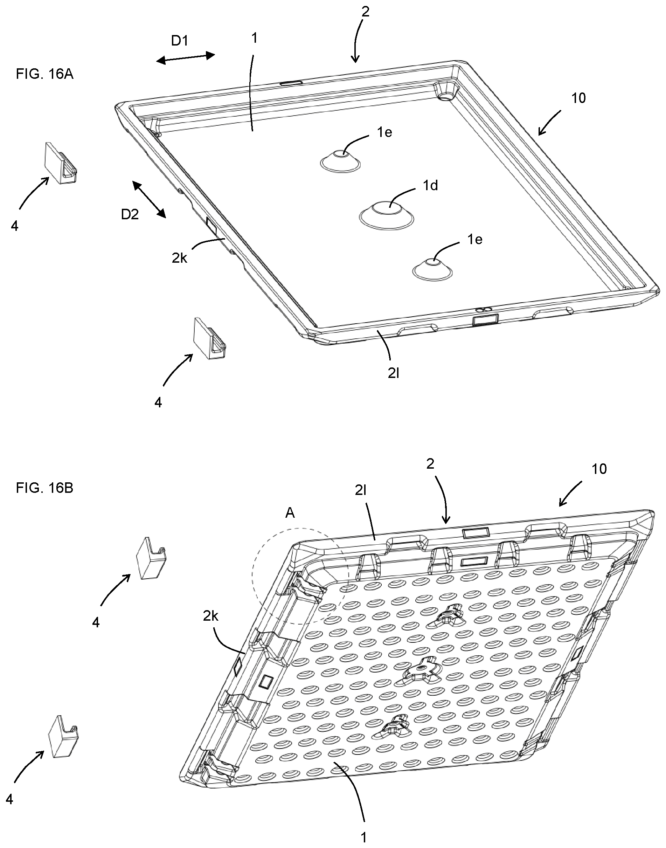

The hydroponic cultivation tray 10 of one embodiment of the present invention shown in Fig. 16 accommodates a nutrient solution therein and is used for hydroponic cultivation. The tray 10 is composed of a hollow resin molded body.

The tray 10 has a substantially rectangular shape in a plan view, and its dimension in the short side direction is, for example, 60 to 240 cm, preferably 80 to 160 cm, and more preferably 100 to 140 cm (120 cm in this embodiment). Specifically, the dimension in the long side direction is, for example, 90 to 360 cm, preferably 120 to 270 cm, and more preferably 140 to 240 cm (180 cm in this embodiment). The thickness of the tray 10 is, for example, 5 to 20 cm, and preferably 8 to 14 cm (11.3 cm in this embodiment).

The tray 10 has a container shape opened upward, and comprises a bottom portion 1 and a side portion 2 rising so as to surround the bottom portion 1. Terms related to directions such as "upper", "lower", and "horizontal" in the following description mean directions in a state where the bottom portion 1 is grounded.

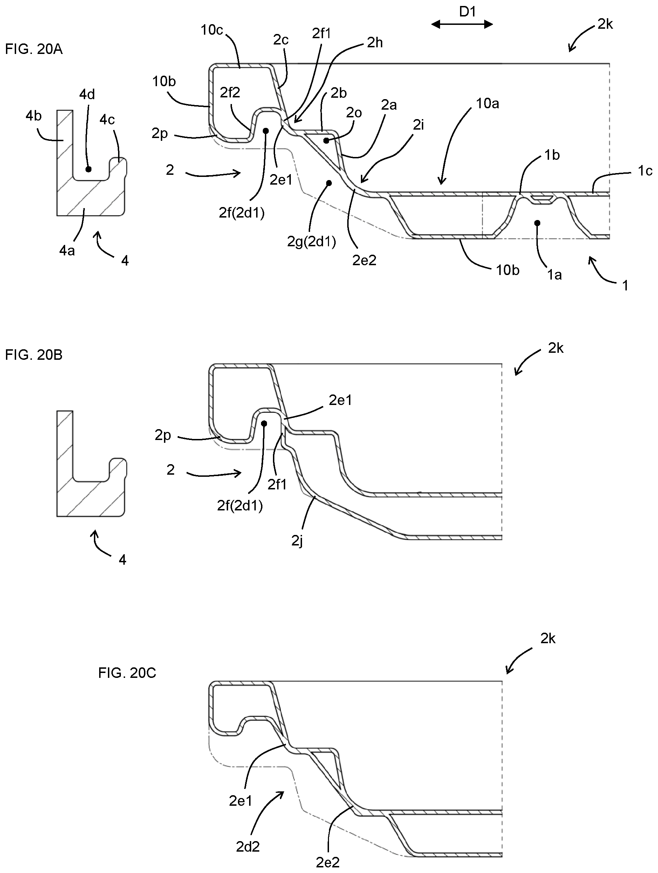

The side portion 2 comprises a pair of long side portions 2k corresponding to long sides of the rectangular side portion 2 and a pair of short side portions 2l corresponding to short sides, and the long side portion 2k and the short side portion 2l are connected to each other at a corner portion. As shown in Figs. 20 to 22, the tray 10 has a double wall structure comprising an inner wall 10a and an outer wall 10b. The inner wall 10a and the outer wall 10b are connected to each other at an upper wall 10c. The upper wall 10c is preferably horizontal. The inner wall 10a is disposed inside the tray 10, and the outer wall 10b is disposed outside the tray 10 relative to the inner wall 10a. The distance between the inner surface of the inner wall 10a and the outer surface of the outer wall 10b is, for example, 10 to 50 mm, preferably 20 to 40 mm (32 mm in this embodiment).

As shown in Fig. 16B, Fig. 17A and Fig. 20A, the bottom portion 1 is provided with a recessed portion 1a configured by recessing the outer wall 10b toward the inner wall 10a. The recessed portion 1a has a conical shape. A large number of recessed portions 1a are provided substantially uniformly over the entire bottom portion 1. At the bottom of the recessed portion 1a, a welded portion 1b in which the inner wall 10a and the outer wall 10b are welded (in other words, "joined" or "integrated"; the same applies hereinafter) to each other is provided. By providing the recessed portion 1a and the welded portion 1b, rigidity of the bottom portion 1 is enhanced.

As shown in Fig. 20A, in the side portion 2, the inner wall 10a comprises a lower inner wall 2a, an intermediate inner wall 2b, and an upper inner wall 2c in this order from the inner wall 10a at the bottom portion 1 (hereinafter, bottom inner wall 1c) side. The intermediate inner wall 2b has a gentler inclination than the lower inner wall 2a and the upper inner wall 2c, and is preferably parallel to the bottom inner wall 1c. The intermediate inner wall 2b is preferably provided over the entire circumference of the tray 10. For example, a panel holding plants to be hydroponically cultivated can be placed on the intermediate inner wall 2b. The lower inner wall 2a has a steeper inclination than the upper inner wall 2c. This is because the upper inner wall 2c has a relatively gentle inclination to make it easier to put the panel into the tray 10, whereas the lower inner wall 2a has a relatively steep inclination so as to increase the amount of nutrient solution that can be accommodated in the tray 10.

As shown in Fig. 16A, the bottom portion 1 is provided with a first protrusion 1d and second protrusions 1e protruding upward. The first protrusion 1d is provided at the center of the bottom portion 1. The first protrusion 1d is disposed between a pair of second protrusions 1e. The first protrusion 1d and the second protrusions 1e are arranged along a second direction D2 described later. The first protrusion 1d and the second protrusions 1e are disposed at the center of the bottom portion 1 in a first direction D1 described later. The first protrusion 1d and the second protrusions 1e function as pillars supporting the panel placed on the intermediate inner wall 2b. Therefore, the upper surface of each of the first protrusion 1d and the second protrusions 1e is at substantially the same height as the upper surface of the intermediate inner wall 2b. Also, when arranging a plurality of (for example, four) panels side by side in the tray 10, the upper surface of the first protrusion 1d is wider than the upper surface of the second protrusion 1e so that the corner portions of the panels can be supported by the first protrusion 1d.

The side portion 2 is provided with recessed portions 2d configured by recessing the outer wall 10b toward the inner wall 10a. The recessed portions 2d are provided in each of the long side portion 2k and the short side portion 2l. Examples of the recessed portion 2d include first to fourth recessed portions 2d1 to 2d4. It is preferable that at least one welded portion is provided in each recessed portion 2d. Examples of the welded portion include first to fifth welded portions 2e1 to 2e5 described later.

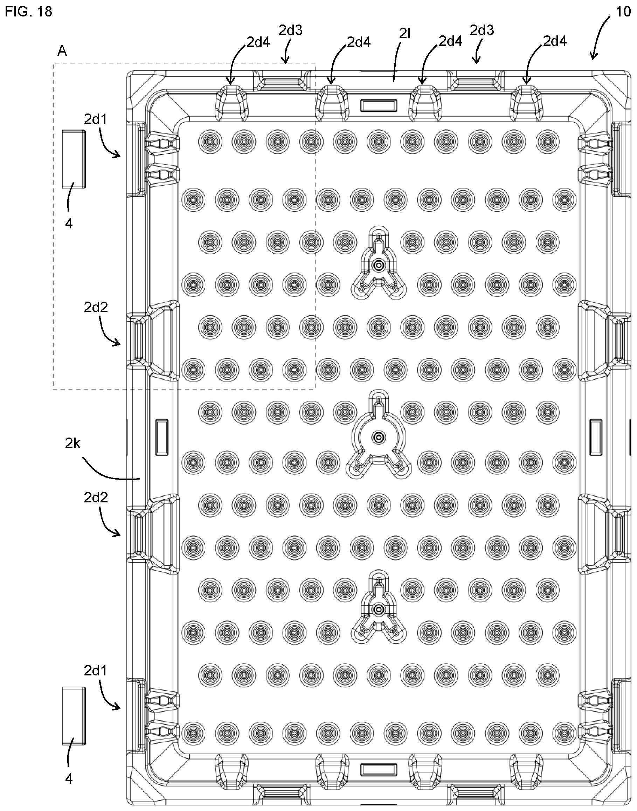

As shown in Figs. 18 to 19, the long side portion 2k is provided with a first recessed portion 2d1 and a second recessed portion 2d2. The first recessed portion 2d1 comprises an engagement recessed portion 2f and a reinforcing recessed portion 2g. As shown in Figs. 20A to 20B, the engagement recessed portion 2f is configured by recessing the outer wall 10b upward. The engagement recessed portion 2f comprises an inner side wall 2f1 and an outer side wall 2f2. The inner side wall 2f1 and the outer side wall 2f2 are a pair of side walls of the engagement recessed portion 2f, and the inner side wall 2f1 is disposed further inside the tray 10 than the outer side wall 2f2. It is preferable that the inner side wall 2f1 is provided with a first welded portion 2e1 in which the inner wall 10a and the outer wall 10b are welded to each other. It is preferable that the first welded portion 2e1 is configured by welding the outer wall 10b to a portion 2h spanning the upper inner wall 2c and the intermediate inner wall 2b.

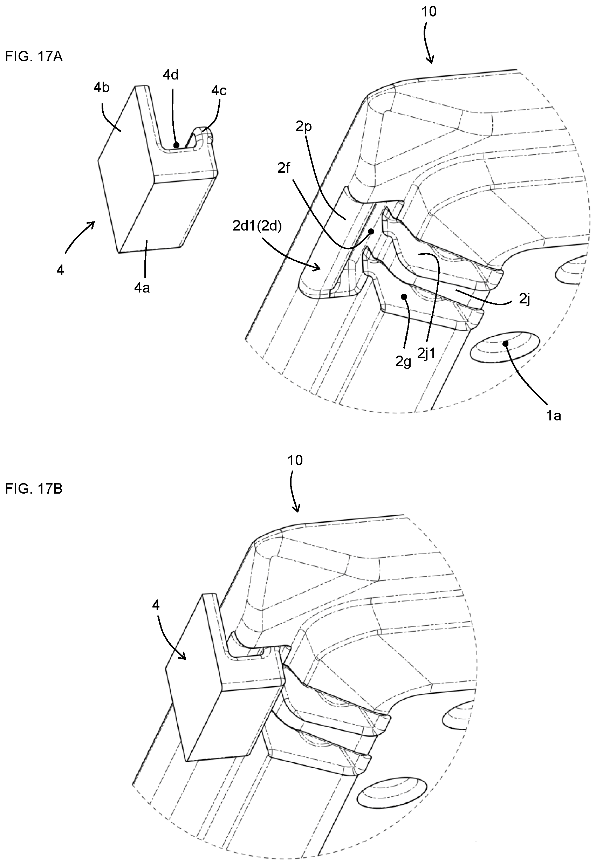

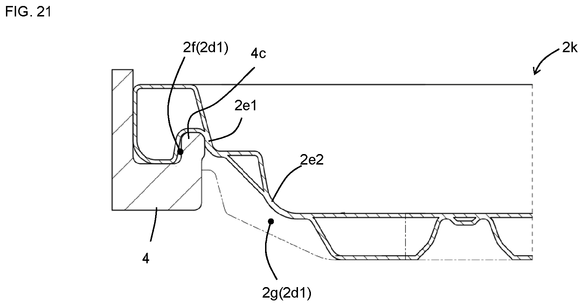

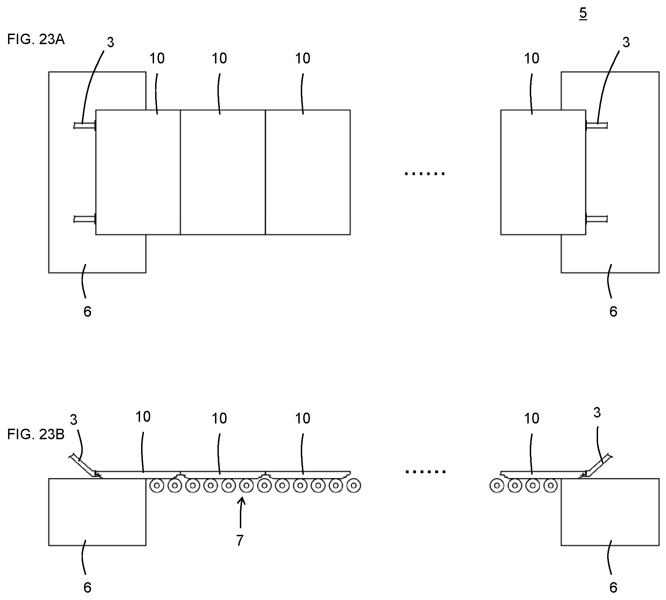

The engagement recessed portion 2f is a portion for engaging a distal end portion 4c of a hook 4 attached to a drive device 3 (shown in Fig. 23). The hook 4 comprises a base 4a, a mounting portion 4b, and the distal end portion 4c. The mounting portion 4b and the distal end portion 4c are arranged to extend upward from the base 4a. The drive device 3 is a device for moving the hook 4. The drive device 3 is attached to the mounting portion 4b. A gap 4d is provided between the mounting portion 4b and the distal end portion 4c, and when the distal end portion 4c is engaged with the engagement recessed portion 2f as shown in Fig. 17B and Fig. 21, an outer portion 2p provided outside the engagement recessed portion 2f is accommodated in the gap 4d. The tray 10 can be conveyed (that is, moved in the horizontal direction) by moving the hook 4 in the direction of the inner side wall 2f1 or the outer side wall 2f2 (that is, in the horizontal direction) in a state where the distal end portion 4c of the hook 4 is engaged with the engagement recessed portion 2f.

When moving the tray 10 by pulling, normally only one tray is pulled, but when moving the tray 10 by pushing, a plurality of trays 10 may be arranged in series and all the trays may be moved simultaneously by pushing the tray 10 at the extreme end. For this reason, when pushing the tray 10, a large force is applied to the tray 10 and the tray 10 is easily deformed. On the other hand, in the tray 10 of the present embodiment, the first welded portion 2e1 is provided on the inner side wall 2f1 to which a large load from the hook 4 is easily applied to enhance its rigidity, so that deformation of the tray 10 when pushing the tray 10 can be suppressed.

Assuming that a direction in which the inner side wall 2f1 and the outer side wall 2f2 face each other is a first direction D1, it is preferable that the engagement recessed portion 2f extends in a second direction D2 perpendicular to the first direction D1. That is, the engagement recessed portion 2f preferably has an elongated shape extending in the second direction D2. The distal end portion 4c of the hook 4 also has an elongated shape extending in the second direction D2. The distal end portion 4c has a shape and size capable of being accommodated in the engagement recessed portion 2f with almost no gap, and the hook 4 and the engagement recessed portion 2f are engaged by accommodating the distal end portion 4c in the engagement recessed portion 2f. According to such a configuration, force applied from the distal end portion 4c to the tray 10 is easily dispersed, so that local deformation of the tray 10 is suppressed. The first direction D1 is, for example, a short side direction, and the second direction D2 is, for example, a long side direction. The hook 4 abuts against the inner side wall 2f1 when pushing the tray 10 with the hook 4.

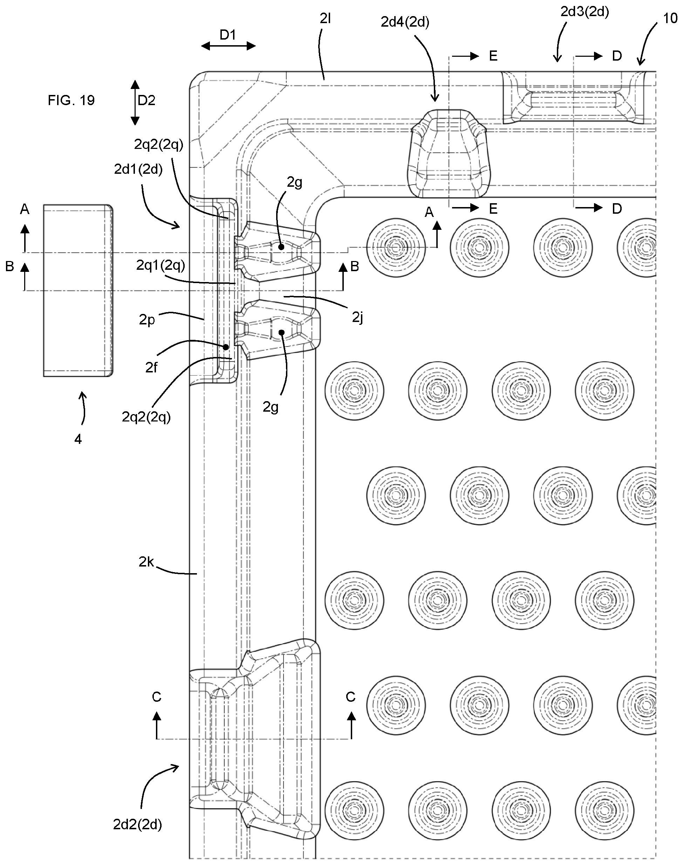

The reinforcing recessed portion 2g is provided at a position adjacent to the engagement recessed portion 2f so as to extend in the first direction D1. That is, the reinforcing recessed portion 2g has an elongated shape extending in the first direction D1. By providing the reinforcing recessed portion 2g, deformation of the tray 10 when pushing the tray 10 can be further suppressed. It is preferable to provide a pair of reinforcing recessed portions 2g at positions adjacent to each engagement recessed portion 2f. In this case, deformation of the tray 10 when pushing the tray 10 can be further suppressed. The reinforcing recessed portion 2g is preferably provided so as to be continuous with the engagement recessed portion 2f. As shown in Fig. 19 and Fig. 20B, the inner side wall 2f1 at a portion 2q of the inner side wall 2f1 where the reinforcing recessed portion 2g is not provided (that is, a portion 2q1 between the pair of reinforcing recessed portions 2g or a portion 2q2 on the opposite side to the portion 2q1 across the reinforcing recessed portion 2g) is higher than the inner side wall 2f1 at the reinforcing recessed portion 2g.

Therefore, in the portion 2q, the contact area with the hook 4 is large, making it easier to receive the load from the hook 4. On the other hand, it is preferable that the upper end of the reinforcing recessed portion 2g does not reach the upper surface of the engagement recessed portion 2f, and in this case, as shown in Fig. 20A and Fig. 21, the inner side wall 2f1 of the engagement recessed portion 2f exists also in the reinforcing recessed portion 2g, can receive the load from the hook 4, and can effectively disperse the load from the hook 4 over the entire inner side wall 2f1 of the engagement recessed portion 2f.

Also, it is preferable that a second welded portion 2e2 in which the inner wall 10a and the outer wall 10b are welded to each other is provided at the bottom of the reinforcing recessed portion 2g. It is preferable that the second welded portion 2e2 is configured by welding the outer wall 10b to a portion 2i spanning the bottom inner wall 1c and the lower inner wall 2a. In this case, deformation of the tray 10 when pushing the tray 10 can be further suppressed. It is preferable to provide a hollow portion 2o where the inner wall 10a and the outer wall 10b are not welded between the first welded portion 2e1 and the second welded portion 2e2.

A portion 2j between the pair of reinforcing recessed portions 2g is preferably a convex portion when viewed from the bottom of the reinforcing recessed portion 2g. In this case, a side wall 2j1 (shown in Fig. 17A) of the portion 2j further enhances the rigidity of the portion to which a strong force is applied when pushing the tray 10, so that deformation of the tray 10 when pushing the tray 10 can be further suppressed. As shown in Fig. 20B, it is preferable that the second welded portion 2e2 is not provided in the portion 2j.

In the second recessed portion 2d2, as shown in Fig. 20C, the first and second welded portions 2e1, 2e2 are provided. By providing such a recessed portion, the rigidity of the tray 10 is further enhanced.

As shown in Fig. 18, two first and second recessed portions 2d1, 2d2 are provided in each long side portion 2k. It is preferable that two second recessed portions 2d2 are provided between two first recessed portions 2d1.

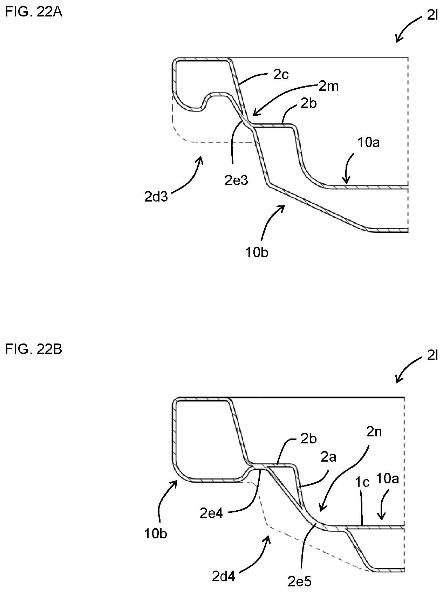

As shown in Figs. 18 to 19, the short side portion 2l is provided with a third recessed portion 2d3 and a fourth recessed portion 2d4. In the third recessed portion 2d3, as shown in Fig. 22A, a third welded portion 2e3 is provided. The third welded portion 2e3 is configured by welding a corner portion 2m of the intermediate inner wall 2b and the upper inner wall 2c and the outer wall 10b. In the third recessed portion 2d3, portions other than the third welded portion 2e3 are not welded. In the fourth recessed portion 2d4, as shown in Fig. 22B, a fourth welded portion 2e4 and a fifth welded portion 2e5 are provided. The fourth welded portion 2e4 is configured by welding the outer wall 10b to the intermediate inner wall 2b. The fifth welded portion 2e5 is configured by welding a corner portion 2n of the lower inner wall 2a and the bottom inner wall 1c and the outer wall 10b. As shown in Fig. 18, two third recessed portions 2d3 are provided in each short side portion 2l, and four fourth recessed portions 2d4 are provided in each short side portion 2l. Each third recessed portion 2d3 is disposed between two fourth recessed portions 2d4 from the end. According to such a configuration, rigidity of the short side portion 2l is enhanced.

The recessed portions provided in the long side portion 2k and/or the short side portion 2l are preferably arranged symmetrically about the center plane in the first direction D1 and/or the second direction D2.

### 2. Conveying device 5 of cultivation tray 10 and method for conveying hydroponic cultivation tray 10

Next, the conveying device 5 of cultivation tray 10 and method for conveying hydroponic cultivation tray 10 will be described using Fig. 23. The conveying device 5 of the present embodiment comprises a pair of bases 6 and a free conveyor 7 disposed therebetween. Examples of the free conveyor 7 include a roller conveyor having no power. A plant factory includes a workplace for performing various operations required for hydroponic cultivation on the tray 10, and a cultivation shelf on which the tray 10 is placed to grow plants. Examples of operations performed in the workplace include planting, harvesting, washing, and inspection. The tray 10 processed in the workplace is conveyed to the base 6 by a conveying means (not shown), and conveyance between the base 6 and the free conveyor 7 is performed by the conveying device 5. The free conveyor 7 has a role as a cultivation shelf. The free conveyor 7 has an advantage that introduction costs and maintenance costs are lower than those of a powered conveyor. On the other hand, a large number of trays 10 are arranged in series on the free conveyor 7, and the weight of each tray 10 containing the nutrient solution is, for example, as much as 80 kg, so means for efficiently conveying these trays 10 becomes important. The number of trays 10 arranged in series is, for example, 10 to 60, preferably 20 to 40 (32 in this embodiment).

The base 6 may have a function of moving the tray 10 in the vertical direction, and the free conveyor 7 may be arranged in multiple stages. In this case, it becomes possible to convey the tray 10 to the free conveyor 7 in multiple stages.

In the present embodiment, the trays 10 are arranged in series in the first direction D1, and as shown in Fig. 17, the tray 10 can be moved from the base 6 onto the free conveyor 7 by pushing the tray 10 with the hook 4 of the drive device 3 engaged with the engagement recessed portion 2f. At this time, a large number of trays 10 already placed on the free conveyor 7 are also pushed and moved together. Also, the tray 10 can be moved from the free conveyor 7 to the base 6 by pulling the tray 10 with the hook 4 of the drive device 3 engaged with the engagement recessed portion 2f. Note that the tray 10 at the other end may be pushed out from the free conveyor 7 to the base 6 by pushing one at one end among the large number of trays 10 arranged in series. In this case, the operation of pulling the tray 10 becomes unnecessary. The drive device 3 can be composed of, for example, a robot arm having the number of axes capable of the above operation.

In Fig. 23, the short side direction of the tray 10 is the first direction D1, but the long side direction of the tray 10 may be the first direction D1.

### 3. Method for manufacturing hydroponic cultivation tray 10

The hydroponic cultivation tray 10 can be formed by molding a parison using a split mold capable of opening and closing relative to each other. The parison may be tubular or sheet-shaped. The resin constituting the parison is preferably a thermoplastic resin such as polyolefin, and examples of the polyolefin include low density polyethylene, linear low density polyethylene, high density polyethylene, polypropylene, ethylene-propylene copolymer, and mixtures thereof. Examples of the molding method include blow molding, vacuum forming, combinations thereof, and the like. At the time of this molding, the welded portions 1b, 2e1 to 2e5 can be formed by welding inner surfaces of opposing portions of the parison (when the parison is composed of a pair of resin sheets, inner surfaces of the pair of resin sheets) to each other.

### [Reference Signs List]

1: bottom portion, 1a: recessed portion, 1b: welded portion, 1c: bottom inner wall, 1d: first protrusion, 1e: second protrusion, 2: side portion, 2a: lower inner wall, 2b: intermediate inner wall, 2c: upper inner wall, 2d: recessed portion, 2d1: first recessed portion, 2d2: second recessed portion, 2d3: third recessed portion, 2d4: fourth recessed portion, 2e1: first welded portion, 2e2: second welded portion, 2e3: third welded portion, 2e4: fourth welded portion, 2e5: fifth welded portion, 2f: engagement recessed portion, 2f1: inner side wall, 2f2: outer side wall, 2g: reinforcing recessed portion, 2h: portion, 2i: portion, 2j: portion, 2j1: side wall, 2k: long side portion, 2l: short side portion, 2m: corner portion, 2n: corner portion, 2o: hollow portion, 2p: outer portion, 2q: portion, 2q1: portion, 2q2: portion, 3: drive device, 4: hook, 4a: base, 4b: mounting portion, 4c: distal end portion, 4d: gap, 5: conveying device, 6: base, 7: free conveyor, 8: molded body, 9: nutrient solution,
10: hydroponic cultivation tray, 10a: inner wall, 10b: outer wall, 10c: upper wall, 20: mold unit for manufacturing hydroponic cultivation panel, 21: first mold, 22: second mold, 23: mold body, 23a: cavity surface, 23b: pinch-off portion, 23c: piece mounting hole, 23c1: female screw portion, 23c2: diameter-expanded portion, 24: hole-forming piece, 24a: insertion protrusion, 24a1: male screw portion, 24a2: diameter-expanded portion, 24b: engagement portion, 24c: piece body, 24d: engagement member, 24d1: engagement portion, 24f: distal end, 24f1: annular portion, 24g: resin reservoir, 25: closing piece, 25a: insertion protrusion, 25a1: male screw portion, 25a2: diameter-expanded portion, 25a3: tapered surface, 25b: engagement portion, 25b1: island-shaped recessed portion, 25c: top surface, 25d: edge, 26: thick line, 31: cultivation object insertion hole, 32: closing piece trace, 32a: edge, 32b: protrusion, 32c: recessed portion, 34: cultivation object, 35: parison, 35a: first resin sheet, 35b: second resin sheet, 35c: burr, 35d: pinch-off portion, 35e: portion, 40: hydroponic cultivation panel, 40a: upper surface, 40b: lower surface, 50: plug body, C: rotation center, CP: center plane, P: plant

## Claims

1. A mold unit for manufacturing a hydroponic cultivation panel, wherein
the mold unit comprises first and second molds configured to be openable and closable,
the first and second molds each comprise a mold body,
a cavity surface of the mold body is provided with a plurality of piece mounting holes,
the piece mounting hole is configured such that both a hole-forming piece for forming a cultivation object insertion hole and a closing piece for closing the piece mounting hole are attachable thereto, and
a number of the cultivation object insertion holes formed in the hydroponic cultivation panel is changeable by changing a number of the hole-forming pieces attached to the piece mounting holes.

2. The mold unit according to claim 1, wherein
the piece mounting hole of the mold body of the first mold and the piece mounting hole of the mold body of the second mold are disposed at positions facing each other.

3. The mold unit according to claim 2, wherein
the hole-forming piece attached to the piece mounting hole of the first mold and the hole-forming piece attached to the piece mounting hole of the second mold have the same shape.

4. A method for manufacturing a hydroponic cultivation panel using the mold unit according to any one of claims 1 to 3,
comprising: a first manufacturing step; and a second manufacturing step, wherein
in the first manufacturing step, the hydroponic cultivation panel is manufactured using the mold unit in a first state,
the first state is a state in which the numbers of the hole-forming pieces and the closing pieces attached to the piece mounting holes are each a first predetermined number,
in the second manufacturing step, the hydroponic cultivation panel is manufactured using the mold unit in a second state,
the second state is a state in which the numbers of the hole-forming pieces and the closing pieces attached to the piece mounting holes are each a second predetermined number,
and the second predetermined number is a number different from the first predetermined number.

5. A hydroponic cultivation tray, wherein
the tray comprises a bottom portion and a side portion rising so as to surround the bottom portion,
the tray comprises an inner wall disposed inside the tray and an outer wall disposed outside the inner wall,
the side portion is provided with an engagement recessed portion configured by recessing the outer wall upward,
the engagement recessed portion comprises an inner side wall and an outer side wall,
the inner side wall and the outer side wall are a pair of side walls of the engagement recessed portion,
and the inner side wall is disposed further inside the tray than the outer side wall.

6. The tray according to claim 5, wherein
a first welded portion in which the inner wall and the outer wall are welded to each other is provided on the inner side wall.

7. The tray according to claim 5, wherein
when a direction in which the inner side wall and the outer side wall face each other is defined as a first direction,
the engagement recessed portion extends in a second direction perpendicular to the first direction.

8. The tray according to claim 5, wherein
when a direction in which the inner side wall and the outer side wall face each other is defined as a first direction,
a reinforcing recessed portion extending in the first direction is provided at a position adjacent to the engagement recessed portion.

9. The tray according to claim 8, wherein
a second welded portion in which the inner wall and the outer wall are welded to each other is provided on a bottom of the reinforcing recessed portion.

10. The tray according to claim 8, wherein
a pair of the reinforcing recessed portions are provided at positions adjacent to the engagement recessed portion.

11. A method for conveying the tray according to any one of claims 5 to 10,
comprising: conveying the tray by moving a hook attached to a drive device in a direction of the inner side wall or the outer side wall in a state where a distal end of the hook is engaged with the engagement recessed portion.
